Europäisches Patentamt

European Patent Office

Office européen des brevets

(19)

(11) Publication number: **0 294 344**
**A2**

(12) **EUROPEAN PATENT APPLICATION**

(21) Application number: **88830245.2**

(22) Date of filing: **31.05.88**

(51) Int. Cl.⁴: **F 04 B 49/08**
**F 04 B 41/02, B 60 T 17/02**

(30) Priority: **04.06.87 IT 6747987**

(43) Date of publication of application:
**07.12.88 Bulletin 88/49**

(84) Designated Contracting States:
**AT BE CH DE ES FR GB GR IT LI LU NL SE**

(71) Applicant: **INDUSTRIE MAGNETI MARELLI S.r.l.**
**Via Adriano 81**
**I-20128 Milano (IT)**

(72) Inventor: **Maccabruni Carlo**
**Via Fratelli Rosselli, 7**
**I-20139 Milano (IT)**

**Lubert, Wojciech**
**Via Antonio Cecchi, 4**
**I-20146 Milano (IT)**

(74) Representative: **Quinterno, Giuseppe et al**
**c/o Jacobacci-Casetta & Perani S.p.A. Via Alfieri, 17**
**I-10121 Torino (IT)**

(54) **A reciprocating volumetric piston compressor and apparatus for supplying compressed air to a pressure reservoir in a pneumatic braking system for motor vehicles.**

(57) The apparatus for supplying compressed air to a reservoir (1) includes a reciprocating volumetric piston compressor (2) connected to the reservoir (1) through a pressure regulator (3). The compressor (2) comprises a device (7a, 31, 32, 32b, 50-53) which can be activated by the air discharged by the pressure regulator (3) to establish permanent communication between the working chamber (5) of the compressor (2) and the intake connector (11). In this way, when the pressure in the reservoir (1) has reached the predetermined level, the working chamber (5) communicates permanently with the intake connector (1) and the energy required by the compressor (2) for its operation is drastically reduced.

FIG. 2

EP 0 294 344 A2

## Description

### A reciprocating volumetric piston compressor and apparatus for supplying compressed air to a pressure reservoir in a pneumatic braking system for motor vehicles

The present invention relates to a reciprocating volumetric piston compressor for use in equipment for supplying compressed air to at least one pressure reservoir in a pneumatic braking system, the compressor being intended, in this condition of use, to be connected to the reservoir through a pressure regulator which has an outlet for discharging the air coming from the compressor when the pressure in the reservoir has reached a predetermined value.

More specifically, the subject of the invention is a compressor of the type comprising:

a body defining a working chamber in which a piston is sealingly slidably mounted,

a head connected to the body and having an intake connector and a delivery connector,

an intake valve and a delivery valve including respective obturators which cooperate with respective seats or apertures formed in a top wall of the working chamber to control communication between the working chamber and the intake and delivery connectors through the seats or apertures; a supplementary aperture being formed in the top wall to enable communication between the intake connector and the working chamber regardless of the position of the obturator of the intake valve; and

control means comprising a supplementary valve for putting the working chamber into permanent communication with the intake connector through the supplementary aperture in the top wall of the working chamber, the supplementary valve being provided with a control piston slidably mounted in the head.

The object of the present invention is to provide a reciprocating volumetric compressor of this type, in which the control means are made in such a way that they introduce practically no additional clearance into the working chamber.

This object is achieved according to the present invention by a compressor of the type specified above, characterised in that the control piston has an end portion which can extend into the supplementary aperture of the top wall of the working chamber and has a cross-section which is slightly smaller than the cross-section of the supplementary aperture; the control piston being movable between

a rest position in which it keeps the supplementary valve closed and in which the end portion extends into the supplementary aperture of the top wall of the body substantially flush with that surface of the wall which faces the working chamber, and

a working position in which it opens the supplementary valve to allow permanent communication between the intake connector and the working chamber through the interspace defined between its end portion and the wall of the supplementary aperture.

The invention also concerns apparatus for supplying compressed air to at least one pressure reservoir in a pneumatic braking system of a motor vehicle, including a compressor of the above type.

Further characteristics and advantages of the present invention will become clear from the detailed description which follows with reference to the appended drawings, provided by way of non-limiting example, in which:

Figure 1 is a pneumatic diagram which shows apparatus according to the invention for supplying pressure to a reservoir of a pneumatic braking system of a motor vehicle,

Figure 2 is a partially sectioned view of a compressor according to the invention, and

Figure 3 is a partially sectioned view on the line III-III of figure 2.

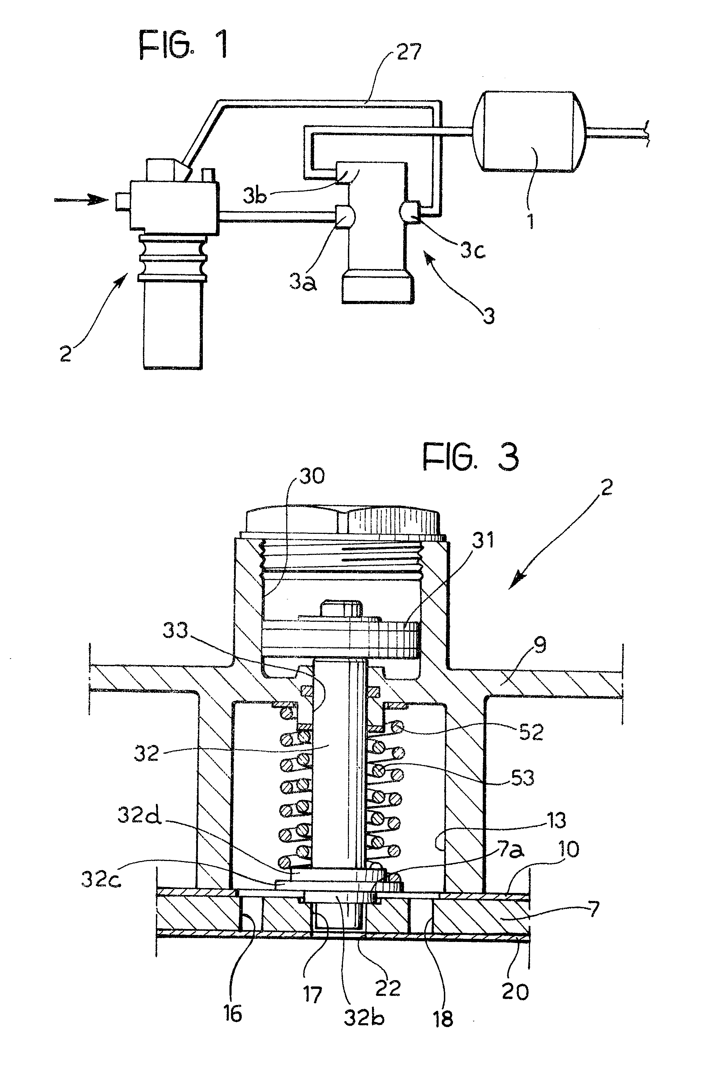

With reference to Figure 1, apparatus for supplying compressed air to a reservoir 1 of the pneumatic braking system of a motor vehicle includes a compressor 2 whose delivery is connected to the reservoir 1 through a pressure regulator (governor) 3. The latter is a device of known type and has an inlet connecter 3a connected to the delivery of the compressor 2, an outlet connector 3b connected to the reservoir 1, and a discharge connector 3c connected to the compressor 2 in the manner which will be better described below.

In known manner, the pressure regulator sends the compressed air coming from the compressor 2 to the reservoir 1 until the pressure in the latter reaches a predetermined value. When this value is reached, the air from the compressor 2 is directed to the discharge connector 3c.

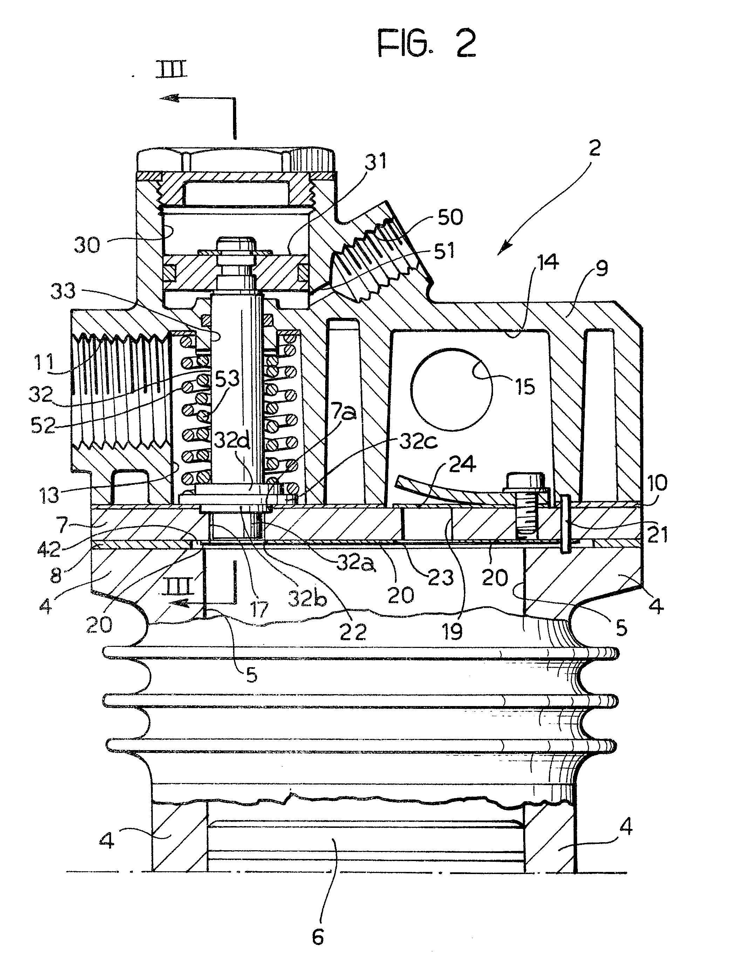

As shown in Figure 2, the compressor 2 includes a body 4 in which can be seen a working chamber 5 in which a piston 6 is sealingly axially translatable.

A plate 7 is fixed to the upper end of the body 4 with the interposition of a gasket 8. A head 9 is fixed to this plate with the interposition of a shaped gasket 10.

As can be seen from Figure 2, two separate chambers 13 and 14, intake and delivery respectively, are formed in the head 9. The intake chamber 13 communicates with the atmosphere through an intake connector 11. The delivery connector of the compressor, indicated 15, is formed in the head 9 and communicates with the delivery chamber 14.

As can be seen from an examination of Figures 2 and 3 together, three apertures, indicated 16 to 18, are formed in the portion of the intermediate plate 7 which faces the intake chamber 13.

Communication between the working chamber 5 and the intake chamber 13 is controlled by a leaf obturator 20 fixed at one end ot the plate 7, the body 4, and the head 9 by means of fixing pins 21, of which only one is visible in Figure 2. The other end of the leaf 20 is movable in a space 42 (Figure 2) defined between the top of the body 4 and the plate 7 and whose height defines the maximum opening travel of the leaf. The latter has two apertures 22 and 23 facing the apertures 17 and 19 of the plate 7 respectively.

A leaf obturator 24 with one end fixed to the plate 7 controls communication between the working chamber 5 and the delivery chamber 14 through the apertures 19 and 23 of the plate 7 and the leaf 20.

A control chamber 30 is formed in the upper part of the head above the intake chamber 13, and a control piston 31 provided with a rod 32 at its lower end is sealingly slidably mounted therein. The rod extends through an aperture 33 formed in the top of the intake chamber 13 in alignment with the aperture 17 of the plate 7.

The portion of the control chamber 30 which is situated above the piston 31 communicates with a threaded connector 50 through a passage 51 (Figure 2). This connector is intended to be connected to the discharge outlet 3c of the pressure regulator 3 by means of tubing, indicated 27 in Figure 1.

The rod 32 of the piston 31 has an end portion 32a which extends into the aperture 17 of the plate 7 constituting the top wall of the working chamber 5. The end portion 32a of the rod of the piston 31 has a cross-section which is slightly smaller than the cross-section of the aperture 17. Adjacent its edge, the plate 7 has a recess 7a which acts as a valve seat with which a radial projection 32b of the rod 32 of the iston 31 cooperates. Adjacent this projection, the rod 32 has further projections 32c and 32d against which press two helical spring 52 and 53 arranged around the rod 32 and reacting against the top wall of the intake chamber 13. These springs tend to keep the rod 32 and the piston 31 in the position illustrated in Figures 2 and 3. In this condition, the projection 32b of the rod 32 pushes against the recess 7a of the plate 7 and the lower end face of the portion 32a of the rod is substantially flush with the lower face of the plate 7, that is, with the top wall of the working chamber 5.

In operation, the compressor 2 is activated to recharge the reservoir 1 through the pressure regulator 3. When the pressure in the reservoir has reached a predetermined value, the pressure regulator directs the air coming from the compressor towards the discharge outlet 3c.

This air passes through the tubing 27 into the passage 51 of the compressor and causes the piston 31 and the rod 32 to rise against the action of the springs 52 and 53. The movement of the rod 32 causes the valve constituted by the recess 7a of the plate 7 and the portion 32a of the rod 32 to open: the intake chamber 13 is thus put into communication with the working chamber 5 of the compressor through the annular interspace defined between the wall of the aperture 17 of the plate 7 and the portion 32a of the rod 32. The communication thus established between the intake chamber 13 and the working chamber 5 persists, regardless of the position of the intake leaf 20. In this condition, the compressor works with a minimum consumption of energy.

As soon as the pressure in the reservoir 1 falls below a predetermined calibration value, the pressure regulator 3 interrupts the communication between its connectors 3a and 3c, re-establishing the communication between the connectors 3a and 3b.

The piston 31, thrust by the springs 52 and 53, moves downwards. The on-off valve 32b-7a closes and the permanent communication between the working chamber 5 and the intake chamber 13 is interrupted. The compressor 2 resumes normal opertion.

By virtue of the fact that the end portion 32a of the rod 32 has a shape which corresponds essentially to that of the aperture 17, the clearance is reduced to a minimum.

## Claims

1. A reciprocating volumetric compressor comprising:

a body (4) defining a working chamber (5) in which a piston (6) is sealingly slidably mounted,

a head (9) connected to the body (4) and having an intake connector (11) and a delivery connector (15),

an intake valve (20, 16, 18) and a delivery valve (24, 19) including respective obturators (20, 24) which cooperate with corresponding seats or apertures (16, 18; 19) formed in a top wall (7) of the working chamber (5) to control communication between the working chamber (5) and the intake and delivery connectors (11, 15) through the seats or apertures, a supplementary aperture (17) being formed in the top wall (7) to enable communication between the intake connector (11) and the working chamber (5) regardless of the position of the obturator (20) of the intake valve; and

control means (31, 32; 50 to 53) comprising a supplementary valve (7a, 32b) for putting the working chamber (5) into permanent communication with the intake connector (11) through the supplementary aperture (17) of the top wall (7) of the working chamber, the supplementary valve being provided with a control piston (31, 32) slidably mounted in the head (9),

characterised in that the control piston (31, 32) has an end portion (32a) which can extend into the supplementary aperture (17) of the top wall (7) of the working chamber and has a cross-section which is slightly smaller than the cross-section of the supplementary aperture (17); the control piston (31, 32) being movable between

a rest position in which it keeps the supplementary valve closed and in which the end portion (32a) extends into the supplementary aperture (17) of the top wall of the working chamber (4) substantially flush with that surface of the wall which faces the working chamber, and

a working position in which it opens the supplementary valve (7a, 32b) to allow permanent communication between the intake connector (11) and the working chamber (5) through the interspace defined between the end portion (32a) and the wall of the sup-

plementary aperture (17).

0294344

FIG. 1

FIG. 3

FIG. 2

0294344